# EUROPÄISCHE PATENTSCHRIFT

(11) **EP 2 929 194 B1**
(45) Veröffentlichungstag und Bekanntmachung des Hinweises auf die Patenterteilung: **06.06.2018**
(21) Anmeldenummer: 13828767.7
(22) Anmeldetag: 02.12.2013
(51) Int. Cl.: F16B 11/00, F16B 19/02, F16B 5/04, F16B 31/02

(54) **INDIKATIONSBOLZEN ZUR ÜBERWACHUNG VON KLEBEVERBINDUNGEN IN STRUKTURBAUTEILEN**
INDICATION BOLT FOR MONITORING ADHESIVE BONDS IN STRUCTURAL ELEMENTS
BOULON INDICATEUR PERMETTANT DE SURVEILLER DES ASSEMBLAGES COLLÉS DE PIÈCES DE STRUCTURE

(30) Priorität: 05.12.2012 DE 102012023717
(43) Veröffentlichungstag der Anmeldung: 14.10.2015
(73) Patentinhaber: Airbus Defence and Space GmbH, 85521 Ottobrunn (DE)
(72) Erfinder: NIEDERMEIER, Stefan, D-84036 Landshut (DE); KÖRWIEN, Thomas, D-85635 Höhenkirchen (DE)
(74) Vertreter: LKGLOBAL Lorenz & Kopf PartG mbB Patentanwälte
(86) Internationale Anmeldenummer: PCT/DE2013/000714
(87) Internationale Veröffentlichungsnummer: WO 2014/086331

(56) Entgegenhaltungen:
- EP-A2- 2 423 518
- WO-A1-2009/094775
- WO-A2-2006/102566
- WO-A2-2011/038338
- DE-A1- 19 539 685
- DE-A1-102009 009 112
- GB-A- 1 471 666
- US-A- 5 088 867
- US-A1- 2002 014 572
- US-A1- 2005 244 215
- US-A1- 2006 067 806

## Beschreibung

### GEBIET DER ERFINDUNG

Die Erfindung betrifft ein Strukturbauteil und ein Luftfahrzeug mit einem Strukturbauteil.

### HINTERGRUND DER ERFINDUNG

Um eine Verbindung zwischen zwei Bauteilen bzw. Komponenten, beispielsweise eines Fahrzeugs, herzustellen, können Klebeverbindungen verwendet werden. Dabei unterscheidet man zwischen primär verklebten Verbindungen, bei denen der Klebevorgang während der Zeit durchgeführt wird, in der auch die beiden Bauteile geformt werden (beispielsweise in einer Presse), und sekundär verklebten Verbindungen, bei denen die Komponenten nachträglich miteinander verklebt werden.

Bei einer Klebeverbindung eines tragenden Strukturbauteils kann es wichtig sein, betriebsbedingte Schäden zu überprüfen. Die meisten Klebeverbindungen sind nach der Fügung und dem Zusammenbau zur übergeordneten Struktur nicht mehr von allen Seiten zugänglich und können daher nicht mehr gut durch Sichtinspektion untersucht werden.

In der Luftfahrt sind sekundär verklebte Verbindungen im Moment nicht zugelassen, da es in der Regel nicht möglich ist, auf einfache Art und Weise zu überprüfen, ob eine sekundär verklebte Verbindung beschädigt ist oder nicht.

Bekannte Verfahren zum nicht-destruktiven Testen von Klebeverbindungen umfassen beispielsweise Ultraschall und Thermographie. Bei großen Wandstärken oder Dickenänderungen der Klebefuge sind diese Verfahren jedoch nur eingeschränkt anwendbar oder nur schwer einsetzbar.

Auch bei einer fehlerhaften Verklebung, bei der nur unter Last ein Spalt zwischen den nicht mehr ordnungsgemäß verklebten Komponenten erzeugt wird (so genannte "kissing bonds"), kann mit oben genannten Verfahren häufig kein Fehler entdeckt werden.

Aus diesen Gründen werden bei Klebeverbindungen häufig zusätzliche Klemmbolzen (siehe z.B. WO 2006/102566 A) verwendet, die dazu ausgeführt sind, die Last der Verbindung zu tragen, wenn die Klebeverbindung beschädigt ist. Solche Klemmbolzen können dann eine weitere Ausbreitung eines Schadens verzögern, können aber auch ein Erkennen des Schadens verhindern.

### ZUSAMMENFASSUNG DER ERFINDUNG

Es ist Aufgabe der Erfindung, ein einfach aufgebautes Strukturbauteil bereitzustellen, das leicht auf Schäden untersucht werden kann.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung. Die Erfindung wird durch den Gegenstand des unabhängigen Anspruchs definiert.

Ein erster Aspekt der Erfindung betrifft ein Strukturbauteil, beispielsweise ein Strukturbauteil eines Luftfahrzeugs, Bodenfahrzeugs oder Wasserfahrzeugs. Das Strukturbauteil kann aber auch Bestandteil anderer Vorrichtungen, wie etwa einer Windkraftanlage, sein. Ein Strukturbauteil kann dazu ausgeführt sein, einer auf das Fahrzeug bzw. die Vorrichtung wirkenden Last ausgesetzt zu sein. Beispielsweise kann die Strukturkomponente ein Bestandteil der Tragestruktur des Fahrzeugs sein.

Das Strukturbauteil umfasst eine erste Komponente und eine zweite Komponente, die beispielsweise flächige und/oder plattenartige Komponenten sein können, die miteinander verklebt sind. Beide Komponenten bzw. Bauteile können aus Metall oder Kunststoff bestehen bzw. Metall und/oder Kunststoff umfassen. Ein derartiger Kunststoff kann beispielsweise ein kohlenstofffaserverstärkter Kunststoff sein.

Die beiden Komponenten sind mittels einer Klebeverbindung miteinander verbunden, die beispielsweise zwischen den beiden Komponenten angebracht ist. Bei der Klebeverbindung kann es sich um eine sekundäre Klebeverbindung handeln. Mit anderen Worten können die beiden Komponenten getrennt voneinander geformt oder hergestellt worden sein und anschließend miteinander verklebt worden sein.

Bei der Klebeverbindung bzw. Verklebung, die eine Schicht aus verfestigtem Kleber umfassen kann, kann es sich um eine strukturelle Verklebung von Faserverbundwerkstoffbauteilen oder um eine Reparaturklebung in Faserverbundwerkstoffen handeln.

Gemäß einer Ausführungsform der Erfindung umfasst das Strukturbauteil einen Indikationsbolzen, der an der ersten Komponente und der zweiten Komponente fixiert ist. Mit anderen Worten kann der Indikationsbolzen beispielsweise wie ein Niet mit dem Strukturbauteil verbunden sein, muss aber nicht an den einzelnen Komponenten befestigt sein. Es ist jedoch möglich, dass der Indikationsbolzen zumindest abschnittsweise mit der ersten und/oder zweiten Komponente verbunden, beispielsweise verklebt, ist.

Der Indikationsbolzen ist dazu ausgeführt, anzuzeigen, wenn die erste Komponente und die zweite Komponente sich relativ zueinander bewegt haben. Ein Indikationsbolzen kann ein Stift, Bolzen oder länglicher Körper (aus Metall, Kunststoff und/oder Glas) sein, der an beiden Komponenten fixierbar ist und mit dem eine Relativbewegung der beiden Komponenten nachweisbar bzw. detektierbar ist.

Ist die Verklebung zwischen den beiden Komponenten im Bereich des Indikationsbolzens beschädigt und ist die Strukturkomponente einer Last ausgesetzt, können die beiden Komponenten sich relativ zueinander bewegen (beispielsweise sich zeitweise voneinander entfernen), da die Klebeverbindung sie zumindest in diesem Bereich nicht mehr vollständig aneinander bindet.

Ein Versagen der Klebeverbindung durch Adhäsionsbruch (bei dem die Klebeschicht versagt) oder Kohäsionsbruch (bei dem das verklebte Material versagt) führt bei einer Belastung des Strukturbauteils zu einer (erhöhten) Relativbewegung der beiden Komponenten. Diese Relativbewegung führt dazu, dass der Indikationsbolzen sich an der Sollbruchstelle verformt, abbricht, zerbricht, und/oder aufplatzt, so dass am Indikationsbolzen festgestellt werden kann, dass eine Relativbewegung stattgefunden hat. Diese Relativbewegung kann beispielsweise eine Scherbewegung der beiden Komponenten und/oder ein Abheben der beiden Komponenten voneinander umfassen.

Mit anderen Worten ist der Indikationsbolzen ein Bolzen zur Indikation einer Beschädigung einer geklebten Verbindung.

Der Indikationsbolzen kann als nicht-tragender Indikationsbolzen ausgeführt sein. D.h. der Indikationsbolzen kann nur wenig oder einen geringen Beitrag zu der Festigkeit der Verbindung der beiden Komponenten leisten. Ein derartiger Indikationsbolzen kann insbesondere besonders leicht ausgeführt sein, so dass bei gleicher Belastbarkeit Gewicht für das Strukturbauteil eingespart werden kann.

Mit dem Indikationsbolzen kann eine Verklebung einer Struktur überwacht werden.

Gemäß einer Ausführungsform der Erfindung ist der Indikationsbolzen dazu ausgeführt, sich plastisch zu verformen, wenn die erste Komponente und die zweite Komponente sich relativ zueinander bewegt haben. Beispielsweise kann er sich dauerhaft verbiegen und/oder einen Riss ausbilden. Mit diesen Veränderungen kann später detektiert werden (in einem einfachen Fall durch Sichtkontrolle), ob eine Relativbewegung stattgefunden hat.

Gemäß einer Ausführungsform der Erfindung ist der Indikationsbolzen derart der an der ersten Komponente und der zweiten Komponente fixiert, dass er anzeigt, wenn die Relativbewegung der ersten Komponente und der zweiten Komponente größer als ein vorbestimmter Grenzwert ist. Beispielsweise ist der Indikationsbolzen mit etwas Spiel an den beiden Komponenten befestigt, so dass sich erst dann eine Verformung des Indikationsbolzens ergibt, wenn sich die beiden Komponenten so stark bewegt haben, dass das Spiel ausgeglichen wurde.

Einer oder mehrere Indikationsbolzen können an kritischen Stellen des Strukturbauteils angebracht werden, bei denen die Relativbewegung bei Versagen der Klebeverbindung besonders hoch ist. Die Versagenslast eines Indikationsbolzens kann auch an die Steifigkeit des umgebenden Strukturbauteils angepasst sein.

Gemäß einer Ausführungsform der Erfindung ist der Indikationsbolzen in einer Öffnung im Strukturbauteil aufgenommen, die zumindest in der ersten Komponente und/oder der zweiten Komponente einen Durchmesser aufweist, der größer ist als ein Durchmesser des Indikationsbolzens. Durch einen Abstand zwischen dem Indikationsbolzen und der Öffnung kann der vorbestimmte Grenzwert definiert werden, um den sich die beiden Komponenten relativ zueinander bewegen können, ohne dass der Indikationsbolzen eine Relativbewegung anzeigt.

Erfindungsgemäß weist der Indikationsbolzen eine Sollbruchstelle auf, die sich bei einer vorbestimmten Belastung des Indikationsbolzens verformt und/oder bei einer vorbestimmten Belastung des Indikationsbolzens zerbricht. Beispielsweise kann die Sollbruchstelle ein verjüngter Bereich des Indikationsbolzens sein. Wenn der Indikationsbolzen einen Kopf und einen Fuß aufweist, kann die Sollbruchstelle zwischen Kopf und Fuß angeordnet sein.

Gemäß einer Ausführungsform der Erfindung weist der Indikationsbolzen einen Kopf auf, der an der ersten Komponente fixiert ist und weist der Indikationsbolzen einen länglichen Fuß auf, der an der zweiten Komponente fixiert ist. Beispielsweise kann der Kopf gegenüber dem Fuß verdickt sein, so dass er nicht wie der Fuß durch eine Öffnung in der ersten und der zweiten Komponente passt. Der Fuß kann beispielsweise auch eine Verdickung aufweisen, die nicht durch diese Öffnung passt oder kann mit der zweiten Komponente verklebt und/oder verschraubt sein.

Gemäß einer Ausführungsform der Erfindung verbiegt sich der Kopf bei einer vorbestimmten Belastung des Indikationsbolzens gegenüber dem Fuß. Auf diese Weise kann durch einfache Sichtinspektion festgestellt werden, ob eine Beschädigung der Klebeverbindung möglich ist.

Gemäß einer Ausführungsform der Erfindung löst sich der Kopf (oder ein Bestandteil des Kopfes) bei einer vorbestimmten Belastung des Indikationsbolzens von dem Fuß. Ist der Kopf farbig markiert, kann so auf einfache Weise das Fehlen des Kopfes festgestellt werden.

Gemäß einer Ausführungsform der Erfindung weist der Indikationsbolzen einen Kopf auf, der in der ersten Komponente versenkt ist, so dass die erste Komponente zusammen mit dem Kopf eine ebene Oberfläche aufweist. Wenn der Kopf verbogen ist bzw. nicht mehr vorhanden ist, kann beispielsweise durch Befühlen der Oberfläche festgestellt werden, ob sich der Indikationsbolzen verformt hat.

Gemäß einer Ausführungsform der Erfindung umfasst der Indikationsbolzen eine geschlossene Kavität, die bei Verformung des Bolzens geöffnet wird. Der Bolzen kann die Form eines (an den Enden geschlossenen) Rohrs aufweisen. Wird der Bolzen geöffnet, kann ein Material oder eine Substanz (flüssig, gasförmig oder fest) aus dem Bolzen austreten, über die die Verformung des Indikationsbolzen festgestellt werden kann. Beispielsweise enthält die Kavität eine detektierbare Substanz, beispielsweise eine Signalfarbe und/oder einen Geruchsstoff.

Gemäß einer Ausführungsform der Erfindung ist der Indikationsbolzen mit dem Strukturbauteil vernietet. Der Indikationsbolzen kann dadurch an dem Strukturbauteil fixiert werden, dass er durch eine Öffnung im Strukturbauteil gesteckt wird und sein anderes Ende derart verdickt wird, dass der Indikationsbolzen nicht mehr aus der Öffnung fallen kann.

Gemäß einer Ausführungsform der Erfindung ist ein Fuß des Indikationsbolzens in wenigstens die zweite Komponente geschraubt. Der Fuß kann aber auch zusätzlich mit der ersten Komponente verschraubt sein. Auf diese Weise muss die Öffnung nicht die zweite Komponente vollständig durchdringen, sondern kann nur teilweise durch die zweite Komponente reichen. Auf diese Weise kann die Belastbarkeit der Strukturkomponente erhöht werden.

Ein weiterer Aspekt der Erfindung betrifft ein Luftfahrzeug mit einem Strukturbauteil, so wie es obenstehend und untenstehend beschrieben ist. Im Allgemeinen kann der Indikationsbolzen beispielsweise bei einer Klebeverbindung von Bauteilen eines Fahrzeugs, wie etwa einem Luftfahrzeug, einem Flugzeug, einem Bodenfahrzeug, einem Pkw, Lkw, Bus, einem Wasserfahrzeug, einem Schiff, einem Segelboot verwendet werden. Auch kann der Indikationsbolzen beispielsweise bei einer Klebeverbindung von Bauteilen einer Windkraftanlage, beispielsweise deren Flügeln, verwendet werden.

Zum besseren Verständnis der Erfindung ist ein nicht erfindungsgemäßes Verfahren zum Detektieren einer Beschädigung eines Strukturbauteils beschrieben, das die folgenden Schritte umfasst: Fixieren eines Indikationsbolzens an einer ersten Komponente und einer zweiten Komponente des Strukturbauteils, die miteinander verklebt sind; und Detektieren einer Verformung des Indikationsbolzens, die dadurch entsteht, dass sich die erste Komponente und die zweite Komponente aufgrund einer Beschädigung der Klebeverbindung voneinander relativ zueinander bewegen.

Die Detektion ist beispielsweise mittels einer optischen Detektion möglich, die direkt von einem Wartungstechniker ohne weitere Hilfsmittel durchgeführt werden kann. Ein vorstehender, schiefstehender und/oder abgeplatzter Kopf des Indikationsbolzens kann durch einfache Sichtprüfung erkannt werden.

Auch ist eine akustische Detektion möglich, beispielsweise über Geräusche, die von einem versagenden Indikationsbolzen abgegeben werden. Beispielsweise kann in einer Kavität im Inneren des Bolzens ein Überdruck vorhanden sein, der bei einer Beschädigung des Bolzens entweicht und dabei ein charakteristisches Geräusch abgibt. Dieses Geräusch kann beispielsweise von einem Sensor aufgezeichnet und später ausgewertet werden.

Gemäß einem nicht erfindungsgemäßen Beispiel umfasst das Verfahren weiter den Schritt von Detektieren der Verformung mittels (dem Detektieren) einer Substanz, die aus dem Indikationsbolzens austritt, wenn dieser verformt wird.

Hierbei ist beispielsweise eine chemische Detektion des austretenden Stoffes möglich, der beispielsweise von einem Sensor erfasst werden und ausgewertet werden kann. Auch das Austreten eines Geruchsstoffes kann beispielsweise von einem Wartungstechniker oder einer Person in der Nähe des Strukturbauteils ohne Hilfsmittel wahrgenommen werden.

Weiter ist es möglich, dass ein Farbstoff aus dem Bolzen nach der Verformung bzw. Beschädigung austritt. Der Farbstoff bzw. eine Farbe, wie etwa eine Signalfarbe, kann in der Nähe des Bolzens, beispielsweise auf der Oberfläche der ersten Komponente, antrocknen und dort einen dauerhaften Hinweis auf die Verformung des Bolzens hinterlassen.

Gemäß einem weiteren nicht erfindungsgemäßen Beispiel umfasst das Verfahren weiter den Schritt von Detektieren der Verformung mittels einer Veränderung einer elektrischen Eigenschaft des Indikationsbolzens. Auf diese Weise ist es möglich, eine Verformung und/oder Beschädigung des Indikationsbolzens zu detektieren, die mit bloßem Auge nicht möglich ist.

Beispielsweise kann der Indikationsbolzen mittels Wirbelströmen untersucht werden. Wirbelstrommessgeräte, mit denen auch ein bildgebendes Verfahren eingesetzt werden kann, sind weit verbreitet und in der Regel einfach bedienbar.

Auch ist es möglich, eine Widerstandsmessung am Indikationsbolzen durchzuführen. Ist der Indikationsbolzen beispielsweise in einer Weise gebrochen, dass der Bruch von außen nicht sichtbar ist, kann jedoch der elektrische Widerstand des Bolzens signifikant erhöht sein.

Es ist zu verstehen, dass die Detektionsmöglichkeiten einzeln oder in Kombination angewendet werden können.

Im Folgenden werden Ausführungsbeispiele der Erfindung mit Bezug auf die beiliegenden Figuren detailliert beschrieben.

### KURZE BESCHREIBUNG DER FIGUREN

Fig. 1 zeigt eine schematische dreidimensionale Ansicht einer Tragestruktur eines Flugzeugs gemäß einer Ausführungsform der Erfindung.
Fig. 2 zeigt einen schematischen Querschnitt durch ein Strukturbauteil gemäß einer Ausführungsform der Erfindung.
Fig. 3 zeigt einen schematischen Querschnitt durch ein Strukturbauteil mit einem unbeschädigten Indikationsbolzen gemäß einer Ausführungsform der Erfindung.
Fig. 4 zeigt einen schematischen Querschnitt durch ein Strukturbauteil mit einem beschädigten Indikationsbolzen gemäß einer Ausführungsform der Erfindung.
Fig. 5 zeigt einen schematischen Querschnitt durch ein Strukturbauteil mit einem beschädigten Indikationsbolzen gemäß einer Ausführungsform der Erfindung.
Fig. 6 zeigt einen schematischen Querschnitt durch ein Strukturbauteil mit einem beschädigten Indikationsbolzen gemäß einer Ausführungsform der Erfindung.
Fig. 7 zeigt einen schematischen Querschnitt durch ein Strukturbauteil mit einem unbeschädigten Indikationsbolzen gemäß einer Ausführungsform der Erfindung.
Fig. 8 zeigt einen schematischen Querschnitt durch ein Strukturbauteil mit einem beschädigten Indikationsbolzen gemäß einer Ausführungsform der Erfindung.
Fig. 9 zeigt ein Flussdiagramm für ein nicht erfindungsgemäßes Verfahren zur Detektion einer defekten Klebeverbindung gemäß einem nicht erfindungsgemäßen Beispiel .
Fig. 10 zeigt einen schematischen Querschnitt durch ein Strukturbauteil mit einem Indikationsbolzen gemäß einem nicht erfindungsgemäßen Beispiel.

Grundsätzlich sind identische oder ähnliche Teile mit den gleichen Bezugszeichen versehen.

### DETAILLIERTE BESCHREIBUNG VON AUSFÜHRUNGSBEISPIELEN

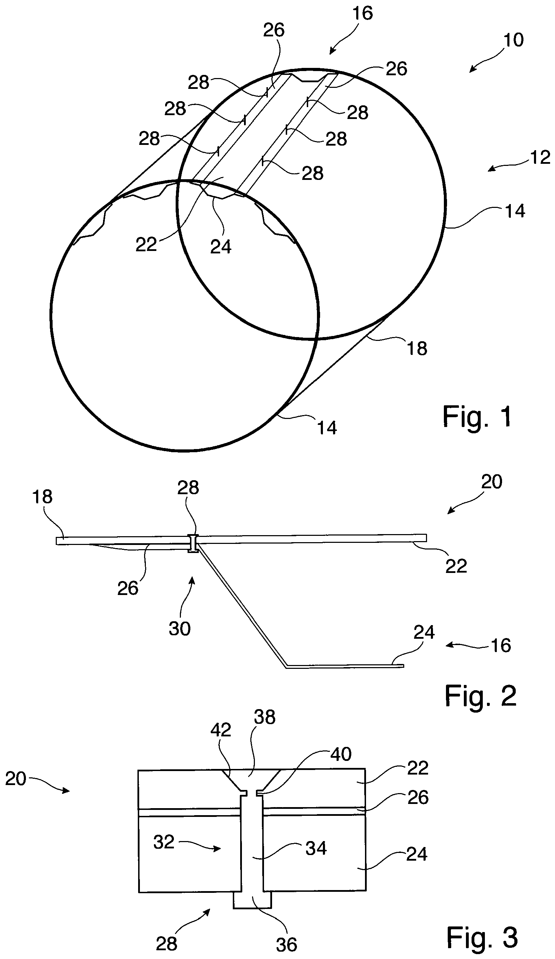

Die Fig. 1 zeigt einen Ausschnitt aus einer Tragestruktur 10 eines Flugzeugs 12, die eine durch Spanten 14 und Stringer 16 versteifte Außenhaut 18 aufweist. Die Stringer 16 umfassen verklebte Versteifungen, die in einer Längsrichtung des Flugzeugs 10 verlaufen.

Die Fig. 2 zeigt einen Ausschnitt aus der Fig. 1 mit einem Strukturbauteil 20, das einen Teil der Außenhaut 18 und einen Teil eines Stringers 16 zeigt. Der Stringer 16 ist dabei durch eine Außenschale 22, die einen Teil der Außenhaut 18 bildet, und eine Innenschale 24 gebildet, die mit der Außenschale 22 verklebt ist. Insgesamt weist die Tragestruktur eine Schalenstruktur mit eingeklebten Versteifungen auf.

Die Außenschale 22 stellt dabei eine erste Komponente 22 des Strukturbauteils 20 dar, die mit der Innenschale 24 als zweite Komponente 24 über eine Klebeverbindung 26 in der Form einer Klebefuge verbunden ist.

Die erste Komponente 22 und die zweite Komponente 24 sind zusätzlich über einen Indikationsbolzen 28 verbunden, der in einem Bereich 30 angeordnet ist, so dass er bei einem Versagen der Klebeverbindung 26 einer hohen Belastung ausgesetzt ist.

Wie aus der Fig. 1 hervorgeht, können eine oder mehrere Klebeverbindungen 26 zwischen den beiden Komponenten 22, 24 jeweils über mehrere Indikationsbolzen 28 gesichert sein.

Die Fig. 3 zeigt einen Ausschnitt aus der Fig. 2. In einer Umgebung des Indikationsbolzens 28 können die beiden Komponenten 22, 24 flächig und/oder plattenartig aufgebaut sein. Die Klebeverbindung 26 kann eine Schicht Klebematerial zwischen den beiden Komponenten 22, 24 umfassen.

Der Indikationsbolzen 28 ist in einer Öffnung 32 in dem Strukturbauteil 20 aufgenommen und an dem Strukturbauteil 20 fixiert. Dazu weist der Indikationsbolzen 28 einen Fuß 34 auf, der mittels einer Verdickung 36 an der zweiten Verdickung fixiert ist, so dass der Indikationsbolzen 28 an der zweiten Komponente 24 in der Öffnung 32 gehalten wird. Weiter weist der Indikationsbolzen 28 einen Kopf 38 auf, der gegenüber dem Fuß 34 verdickt ist, so dass der Indikationsbolzen 28 auch an der ersten Komponente 22 in der Öffnung 32 gehalten wird.

Wenn die Klebeverbindung 26 beschädigt ist und die beiden Komponenten 22, 24 durch Kräfte und Lasten, die auf die Strukturkomponente 20 ausgeübt werden, belastet werden, kann eine Relativbewegung über einen vorbestimmten Grenzwert hinaus entstehen. Beispielsweise können die beiden Komponenten 22, 24 voneinander abheben und/oder sich entlang der Klebeverbindung 26 verschieben.

Der vorbestimmte Grenzwert kann beispielsweise über das elastische Verhalten des Indikationsbolzens 28 oder über ein Spiel zwischen dem Indikationsbolzen 28 und der ersten Komponente 22 und/oder der zweiten Komponente 24 eingestellt werden. Beispielsweise weist die Öffnung 32 einen Durchmesser auf, der etwas größer als der Durchmesser des Fußes 34 des Indikationsbolzens 28 ist.

Bei einer genügen großen Relativbewegung der beiden Komponenten 22, 24 wird der Indikationsbolzen dann derart belastet, dass beispielsweise sein Kopf 38 abschert oder zumindest abgeknickt wird.

Zwischen dem Kopf 38 und dem Fuß 34 weist der Indikationsbolzen 28 eine Sollbruchstelle 40 auf, die einen verjüngten Abschnitt des Indikationsbolzen 28 darstellt. Die Größe der Sollbruchstelle 40 ist so abgestimmt, dass bei einer bestimmten Last auf den Indikationsbolzen28 die Sollbruchstelle 40 sich zumindest dauerhaft verformt oder abreißt.

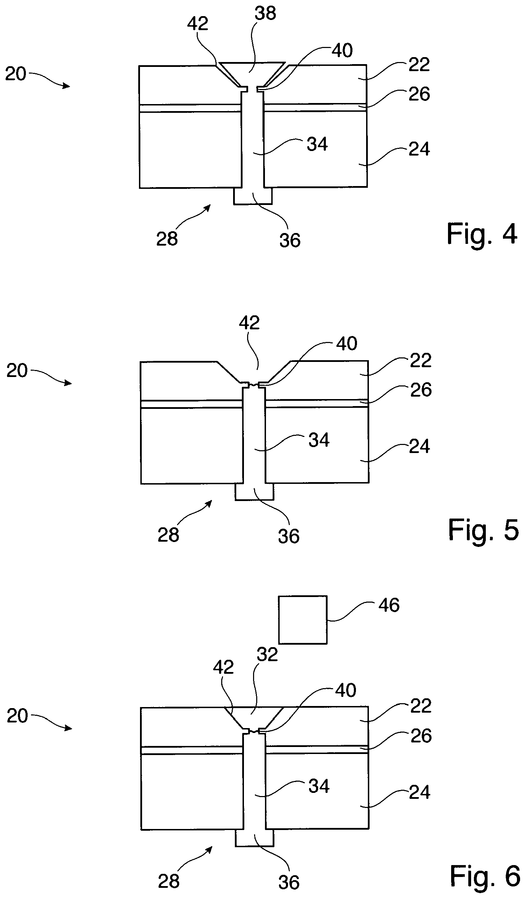

Die Fig. 4 zeigt, dass der Kopf 38 des Indikationsbolzens 28 durch eine Verformung des Indikationsbolzen 28 gegenüber dem Fuß 34 verschoben oder verbogen sein kann.

Wie aus der Fig. 3 hervorgeht, kann der Kopf 38 beispielsweise in einer Vertiefung 42 aufgenommen sein, so dass die Oberfläche des Kopfes 38 mit der Oberfläche der ersten Komponente 22 fluchtet, wenn der Indikationsbolzen 28 nicht verformt ist. Nach dem Verformen kann der Kopf 38 über die Vertiefung hinausstehen, so dass eine Verformung des Indikationsbolzen 28 auch von außen leicht sichtbar ist.

In der Fig. 5 ist gezeigt, dass der Kopf 38 beim Verformen des Indikationsbolzens 28 auch vollständig vom Fuß 34 getrennt werden kann, so dass die Vertiefung 42 freigelegt wird.

Auch wenn, wie es in der Fig. 6 gezeigt ist, der Kopf 38 des Indikationsbolzens 28 keine sichtbare Verformung zeigt, kann ein Riss 44, beispielsweise durch den Sollbruchbereich 40, mittels eines Messgeräts oder Sensors 46 detektiert werden, das beispielsweise Wirbelströme im Indikationsbolzen 28 oder dessen elektrischen Widerstand bestimmt.

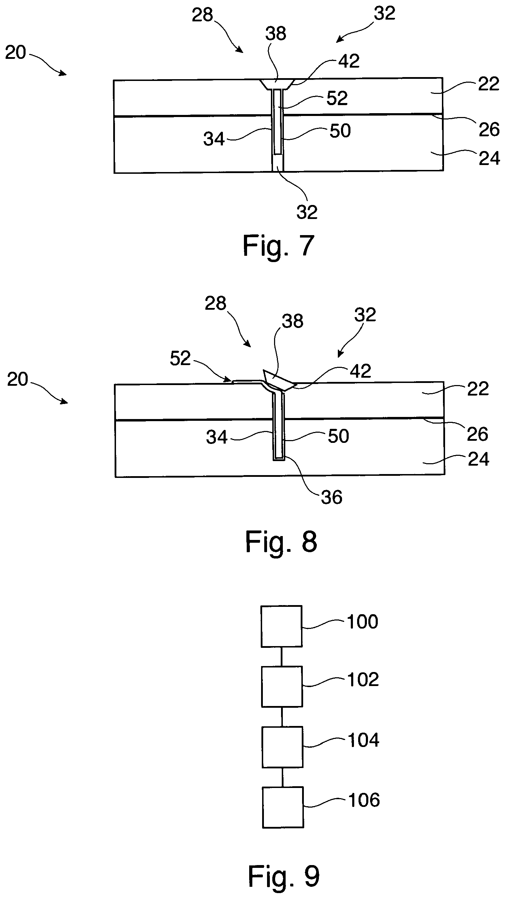

In der Fig. 7 ist dargestellt, dass der Indikationsbolzen 28 eine Kavität 50 aufweisen kann, in deren Innerem eine Substanz 52 eingeschlossen ist, wenn der Indikationsbolzen 28 nicht verformt ist.

Verformt sich der Indikationsbolzen 28, beispielsweise indem der Kopf 38 teilweise abgeschert wird, wird eine Verbindung von der Kavität 50 nach außen hergestellt und die Substanz 52, beispielsweise eine Signalfarbe, kann aus dem Indikationsbolzen 28 austreten.

In der Fig. 7 ist zusätzlich gezeigt, dass die Öffnung 32 die beiden Komponenten 22, 24 vollständig durchdringen kann oder aber auch die zweite Komponente 24 nur teilweise durchdringt. In beiden Fällen kann der Indikationsbolzen 28 in die zweite Komponente 24 geschraubt oder geklebt sein.

Die Fig. 9 zeigt mit Bezug auf Fig. 8 ein nicht erfindungsgemäßes Verfahren zur Detektion einer Beschädigung des Strukturbauteils 20, bei dem ermittelt wird, ob die beiden Komponenten 22, 24 den Indikationsbolzen 28 derart stark belastet haben, dass er sich verformt hat.

Im Schritt 100 werden die beiden Komponenten 22, 24 verklebt, so dass die Klebeverbindung 26 entsteht.

Im Schritt 102 wird eine Öffnung 32 durch die beiden Komponenten 22, 24 erzeugt. Beispielsweise kann die Öffnung schon beim Herstellen der Komponenten 22, 24 vorgesehen sein oder nachträglich in die beiden Komponenten 22, 24 gebohrt werden. Das Erzeugen der Öffnung 32 kann gleichzeitig zum Verkleben im Schritt 100 davor oder danach durchgeführt werden.

In Schritt 104 wird ein Indikationsbolzen 28 in die Öffnung 32 eingesetzt. Der Indikationsbolzen 28 muss nicht mit beiden Komponenten 22, 24 starr verbunden sein, sondern kann lediglich so in der Öffnung 32 fixiert sein, dass er belastet wird, wenn sich die beiden Komponenten 22, 24 relativ zueinander bewegen. Ein Teil der Fixierung kann beispielsweise mit dem konischen Kopf 38 geschehen.

Der Fuß 34 des Indikationsbolzens 28 kann beispielsweise in eine der Komponenten 22, 24 eingeschraubt und/oder eingeklebt werden. Auch kann der Indikationsbolzen 28 mittels einer Nietverbindung in der Öffnung 32 gehalten werden.

Danach kann das Strukturbauteil 20 zu seiner vorgesehenen Bestimmung verwendet werden. Wird die Klebeverbindung 26 (beispielsweise durch eine Überbeanspruchung oder durch Materialermüdung) beschädigt, können sich die beiden Komponenten 22, 24 sich die beiden Komponenten 22, 24 (über einen vorbestimmten Grenzwert hinaus) relativ zueinander bewegen. Der Indikationsbolzen 28 ist so ausgelegt bzw. ausgeführt, dass er sich zu verformen beginnt, wenn dieser Grenzwert überschritten wird.

Durch das Verformen des Indikationsbolzens 28 kann beispielsweise der Kopf 38 des Indikationsbolzens 28 verbogen oder abgeschert werden und/oder die Kavität 50 im Inneren des Indikationsbolzens 28 geöffnet werden.

Im Schritt 106 wird der Indikationsbolzen 28 auf seine Unversehrtheit getestet. Dies kann durch Sichtkontrolle, mittels eines Messgeräts und/oder eines Sensors 46 erfolgen.

Mit einer Sichtkontrolle kann ermittelt werden, ob der Kopf 38 des Indikationsbolzens 28 verbogen oder noch vorhanden ist oder ob eine Signalfarbe 52 ausgetreten ist. Ein verbogener oder verschwundener Kopf 38 bzw. das Vorhandensein einer Signalfarbe 52 deutet darauf hin, dass die Klebeverbindung 26 beschädigt wurde.

Mit einem Messgerät oder Sensor 46 kann eine Wirbelstrommessung an dem Indikationsbolzen 28 durchgeführt werden oder ein elektrischer Widerstand des Indikationsbolzens 28 ermittelt werden. Sinkt der Wirbelstrom oder der Widerstand unter einen vorbestimmten Wert, deutet dies auf eine Beschädigung der Klebeverbindung 26 hin.

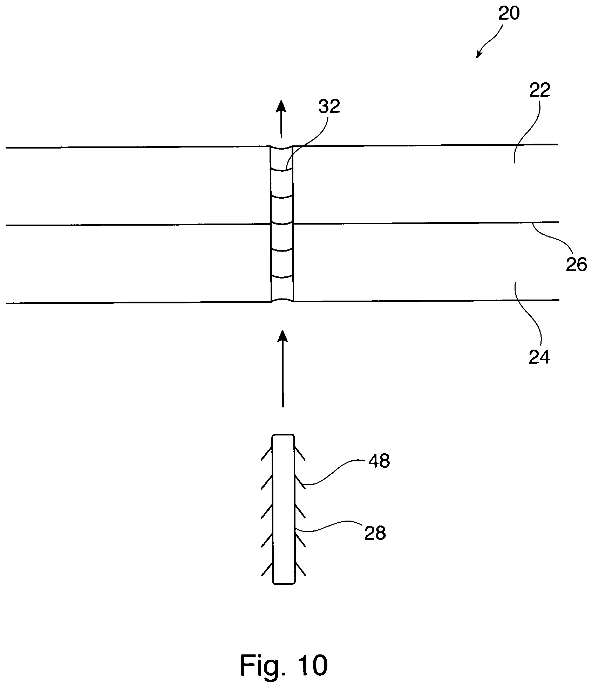

Mit einem Messgerät oder Sensor 46 kann ein aus dem Indikationsbolzen 28 austretender Stoff 52 detektiert werden (beispielsweise während der Stoff austritt). Dies kann gleichzeitig während der bestimmungsgemäßen Verwendung des Verbundbauteils 20 erfolgen. Mit einem Messgerät oder Sensor 46 kann auch ein Geräusch, das der Indikationsbolzen 28 beim Verformen oder Zerbrechen abgibt, aufgezeichnet werden. Die Sensorwerte können aufgezeichnet und später ausgewertet werden. Ein Anschlagen des Messgeräts oder Sensors 46 oder bestimmte Sensorwerte deuten dann auf eine Beschädigung der Klebeverbindung 26 hin. Fig. 10 zeigt ein nicht zur Erfindung gehörendes Beispiel eines Indikationsbolzens 28, der dazu ausgeführt ist, bei einem Abheben der Verbindung 26 in eine vorgegebene Richtung zu wandern. Der Indikationsbolzen 28 kann beispielsweise Widerhaken 48 oder eine (bezüglich der Richtung asymmetrische) Riffelung aufweisen. Wenn sich die beiden Komponenten 22m 24 beispielsweise mehrmals voneinander abheben, wandert der Indikationsbolzen 28 in die mit dem Pfeil beschriebene Richtung. Anschließend kann durch Sichtkontrolle überprüft werden, ob der Indikationsbolzen 28 aus der Öffnung 32 heraus ragt, was darauf hindeutet dass die Klebeverbindung 26 defekt ist.

Ergänzend ist darauf hinzuweisen, dass "umfassend" keine anderen Elemente oder Schritte ausschließt und "eine" oder "ein" keine Vielzahl ausschließt. Bezugszeichen in den Ansprüchen sind nicht als Einschränkung anzusehen.

## Patentansprüche

1. Strukturbauteil (20), umfassend:
eine erste Komponente (22) und eine zweite Komponente (24);
eine Klebeverbindung (26), mit der die erste Komponente (22) und die zweite Komponente (24) miteinander verbunden sind;
einen Indikationsbolzen (28), der an der ersten Komponente (22) und der zweiten Komponente (24) fixiert ist;
wobei der Indikationsbolzen (28) dazu ausgeführt ist, anzuzeigen, wenn die erste Komponente (22) und die zweite Komponente (24) sich relativ zueinander bewegt haben;
**dadurch gekennzeichnet, dass** der Indikationsbolzen (28) eine Sollbruchstelle (40) aufweist, die sich bei einer vorbestimmten Belastung des Indikationsbolzens (28) verformt oder bei einer vorbestimmten Belastung des Indikationsbolzens (28) zerbricht.

2. Strukturbauteil (20) nach Anspruch 1,
wobei der Indikationsbolzen (28) derart der an der ersten Komponente (22) und der zweiten Komponente (24) fixiert ist, dass er anzeigt, wenn die Relativbewegung der ersten Komponente (22) und der zweiten Komponente (24) größer als ein vorbestimmter Grenzwert ist.

3. Strukturbauteil (20) nach Anspruch 1 oder 2,
wobei der Indikationsbolzen (28) dazu ausgeführt ist, sich plastisch zu verformen, wenn die erste Komponente (22) und die zweite Komponente (24) sich relativ zueinander bewegt haben.

4. Strukturbauteil (20) nach einem der vorhergehenden Ansprüche,
wobei der Indikationsbolzen (28) in einer Öffnung (32) im Strukturbauteil (20) aufgenommen ist, die zumindest in der ersten Komponente (22) und/oder der zweiten Komponente (24) einen Durchmesser aufweist, der größer ist als ein Durchmesser des Indikationsbolzens (28).

5. Strukturbauteil (20) nach einem der vorhergehenden Ansprüche,
wobei der Indikationsbolzen (28) einen Kopf (28) aufweist, der an der ersten Komponente (22) fixiert ist und der Indikationsbolzen (28) einen länglichen Fuß (34) aufweist, der an der zweiten Komponente (34) fixiert ist;
wobei sich der Kopf (38) bei einer vorbestimmten Belastung des Indikationsbolzens (28) gegenüber dem Fuß (34) verbiegt, oder
wobei sich der Kopf (38) bei einer vorbestimmten Belastung des Indikationsbolzens (28) von dem Fuß (34) des Indikationsbolzens (28) löst.

6. Strukturbauteil (20) nach einem der vorhergehenden Ansprüche,
wobei der Indikationsbolzen (28) einen Kopf (38) aufweist, der in der ersten Komponente (22) versenkt ist, so dass die erste Komponente (22) zusammen mit dem Kopf (38) eine ebene Oberfläche aufweist.

7. Strukturbauteil (20) nach einem der vorhergehenden Ansprüche,
wobei der Indikationsbolzen (28) eine geschlossene Kavität (50) umfasst, die bei Verformung des Indikationsbolzens (28) geöffnet wird.

8. Strukturbauteil (20) nach Anspruch 7,
wobei die Kavität (50) eine detektierbare Substanz (52) enthält.

9. Strukturbauteil (20) nach Anspruch 7 oder 8,
wobei die Kavität (50) eine Signalfarbe (52) enthält.

10. Strukturbauteil (20) nach einem der vorhergehenden Ansprüche,
wobei der Indikationsbolzen (28) mit dem Strukturbauteil vernietet ist.

11. Strukturbauteil (20) nach einem der vorhergehenden Ansprüche,
wobei ein Fuß (34) des Indikationsbolzens (28) in wenigstens die zweite Komponente (24) geschraubt ist.

12. Luftfahrzeug (12) mit einem Strukturbauteil (20) nach einem der vorhergehenden Ansprüche.

## Claims

1. Structural part (20), comprising:
a first component (22) and a second component (24);
a bonded joint (26), by which the first component (22) and the second component (24) are interconnected with each other;
an indication bolt (28), which is fixed to the first component (22) and the second component (24),
wherein the indication bolt (28) is designed to indicate when the first component (22) and the second component (24) have moved relative to one another;
**characterized in that**
the indication bolt (28) has a predetermined breaking point (40), which deforms under a predetermined loading of the indication bolt (28) or breaks under a predetermined loading of the indication bolt (28).

2. Structural part (20) of claim 1,
wherein the indication bolt (28) is fixed to the first component (22) and the second component (24) such that it indicates when the relative movement of the first component (22) and of the second component (24) is greater than a predetermined threshold.

3. Structural part (20) of claim 1 or 2,
wherein the indication bolt (28) is designed to plastically deform when the first component (22) and the second component (24) have moved relative to one another.

4. Structural part (20) of any one of the preceding claims,
wherein the indication bolt (28) is received in an opening (32) in the structural part (20), which opening at least in the first component (22) and/or the second component (24) has a diameter that is larger than a diameter of the indication bolt (28).

5. Structural part (20) of any one of the preceding claims,
wherein the indication bolt (28) has a head (28), which is fixed to the first component (22), and the indication bolt (28) has an elongated foot (34), which is fixed to the second component (34);
wherein the head (38) deflects under a predetermined loading of the indication bolt (28) in relation to the foot (34), or
wherein the head (38) detaches from the foot (34) of the indication bolt (28) under a predetermined loading of the indication bolt (28).

6. Structural part (20) of any one of the preceding claims,
wherein the indication bolt (28) has a head (38), which is sunk in the first component (22), such that the first component (22) together with the head (38) form a flush surface.

7. Structural part (20) of any one of the preceding claims,
wherein the indication bolt (28) comprises a closed cavity (50), which is opened in the event of deformation of the indication bolt (28).

8. Structural part (20) of claim 7,
wherein the cavity (50) contains a detectable substance (52).

9. Structural part (20) of claim 7 or 8,
wherein the cavity 50) contains a signal color substance (52).

10. Structural part (20) of any one of the preceding claims,
wherein the indication bolt (28) is riveted to the structural part.

11. Structural part (20) of any one of the preceding claims,
wherein a foot (34) of the indication bolt (28) is screwed into at least the second component (24).

12. Aircraft (12) with a structural part (20) of any one of the preceding claims.

## Revendications

1. Elément de construction (20), comprenant:
un premier composant (22) et un second composant (24);
un composé adhésif (26) avec laquelle sont connectés les uns aux autres, le premier composant (22) et le second composant (24);
une tige d'indication (28) qui est fixé sur le premier composant (22) et le second composant (24) ;
dans lequel la tige d'indication (28) est conçu pour indiquer lorsque le premier composant (22) et le second composant (24) sont déplacés par rapport à l'autre;
dans lequel la tige d'indication (28) comprend un point de rupture prédéterminé (40), qui se déforme à une charge prédéterminée de la tige d'indication (28) ou rompe à une charge prédéterminée de la tige d'indication (28).

2. Elément de construction (20) selon la revendication 1,
dans lequel la tige d'indication (28) est fixé au premier composant (22) et le second composant (24) de telle sorte qu'elle signale lorsque le mouvement relatif du premier composant (22) et le second composant (24) est supérieure à une valeur limité prédéterminée.

3. Elément de construction (20) selon la revendication 1 ou 2,
dans lequel la tige d'indication (28) est conçu pour être déformer plastiquement lorsque le premier composant (22) et le second composant (24) sont déplacés par rapport à l'autre.

4. Elément de construction (20) selon l'une quelconque des revendications précédentes,
dans lequel la tige d'indication (28) est reçu dans une ouverture (32) dans l'élément de construction (20), l'ouverture comprend au moins dans le premier composant (22) et / ou le deuxième composant (24) un diamètre , qui est supérieur à un diamètre de la tige d'indication (28).

5. Elément de construction (20) selon l'une quelconque des revendications précédentes,
dans lequel la tige d'indication (28) comprend une tête (28) qui est fixé au premier composant (22) et la tige d'indication (28) comprend un pied allongé (34) qui est fixée au second composant (34);
dans lequel la tête (38) se déforme par rapport au pied (34) à une charge prédéterminée sur la tige d'indication (28), ou
dans lequel la tête (38) se détache à une charge prédéterminée sur la tige d'indication (28) du pied (34) de la tige d'indication (28).

6. Elément de construction (20) selon l'une quelconque des revendications précédentes,
dans lequel la tige d'indication (28) comprend une tête (38) qui est encastré dans le premier composant (22), de sorte que le premier composant (22) conjointement avec la tête (38) comprend une surface plane.

7. Elément de construction (20) selon l'une quelconque des revendications précédentes,
dans lequel la tige d'indication (28) comprend une cavité fermée (50) qui s'ouvre par la déformation de la tige d'indication (28).

8. Elément de construction (20) selon revendication 7,
dans lequel la cavité (50) contiens une substance détectable (52).

9. Elément de construction (20) selon revendication 7 ou 8,
dans lequel la cavité (50) contient une couleur de signale (52).

10. Elément de construction (20) selon l'une quelconque des revendications précédentes,
dans lequel la tige d'indication (28) est riveté avec l'élément de construction.

11. Elément de construction (20) selon l'une quelconque des revendications précédentes,
dans lequel un pied (34) de la tige d'indication (28) est vissé dans au moins le deuxième composant (24).

12. Aéronef (12) avec un élément de construction (20) selon l'une quelconque des revendications précédentes.
